# EUROPÄISCHE PATENTSCHRIFT

(11) **EP 1 215 412 B1**
(45) Veröffentlichungstag und Bekanntmachung des Hinweises auf die Patenterteilung: **03.11.2004**
(21) Anmeldenummer: 01129752.0
(22) Anmeldetag: 13.12.2001
(51) Int. Cl.: F16F 9/02, F16F 9/32

(54) **Kolben-Zylinderaggregat mit einer Verstelleinrichtung**
Piston-cylinder unit with an adjuster
Unité piston-cylindre avec unité de réglage

(30) Priorität: 15.12.2000 DE 10062773
(43) Veröffentlichungstag der Anmeldung: 19.06.2002
(73) Patentinhaber: Stabilus GmbH, D-56070 Koblenz (DE)
(72) Erfinder: Lauderbach, Leo, 56291 Steinbach (DE); Ritter, Andreas, 56206 Hilgert (DE)
(74) Vertreter: Herzog, Markus, Dipl.-Phys. Dr.

(56) Entgegenhaltungen:
- DE-A- 4 040 372
- DE-A- 4 124 869
- DE-U- 29 508 612
- FR-A- 2 730 714

## Beschreibung

Die Erfindung betrifft ein Kolben-Zylinderaggregat in Verbindung mit einer Verstelleinrichtung entsprechend dem Oberbegriff von Patentanspruch 1.

Aus der FR 2 730 714 ist ein Kolben-Zylinderaggregat in der Bauart einer Gasfeder in Verbindung mit einer Verstelleinrichtung zur Öffnungs- und Schließbewegung einer Fahrzeugklappe bekannt. Die Verstelleinrichtung umfasst einen Bowdenzug, der von einer Aufwickeleinrichtung betätigt wird. Der Bowdenzug ist innerhalb eines Zylinders geführt, der eine axial bewegliche Kolbenstange aufweist.

Räumlich und funktional ist der Verstelleinrichtung parallel eine an sich bekannte Gasfeder beigeordnet, die in Ausfahrrichtung der Kolbenstange der Verstelleinrichtung eine Stellkraft ausübt.

Ein Nachteil dieser Aggregat-Kombination besteht in dem benötigten Bauraum. Bei einem Kraftfahrzeug besteht allein für die Gasfeder ohnehin schon ein nur eingeschränkter Bauraum. Des weiteren sind die Kosten für die Verstelleinrichtung, aber auch die zusätzlichen Reibkräfte am Kolben und an der Kolbenstangenführung der Verstelleinrichtung zu berücksichtigen.

Weiterhin zeigt die OS DE 4124869 ein Betätigungssystem gemäß dem Oberbegriff des Anspruchs 1.

Aufgabe der vorliegenden Erfindung ist es, eine Gasfeder zu realisieren, bei der der bauliche Aufwand für die Verstellfunktion reduziert wird.

Erfindungsgemäß wird die Aufgabe mit den Merkmalen des kennzeichnenden Teils des Anspruchs 1 bzw. 12 gelöst.

Mit der konzentrischen Anbindung des Kraftübertragungsmittels können Querkräfte systembedingt verhindert oder zumindest sehr stark reduziert werden. Dadurch kann die Lebensdauer der Gasfeder im Vergleich zum Stand der Technik erhöht werden.

Es ist vorgesehen, dass das Kraftübertragungsmittel zentral in dem Kolben-Zylinderaggregat angeschlossen ist. Der Vorteil dieser Maßnahme besteht darin, dass ein Teil des Kraftübertragungsmittels einerseits geschützt im Inneren des Kolben-Zylinderaggregates liegt und andererseits in der Anwendung beispielsweise bei Möbeln, Designanforderungen erfüllt werden.

Bei einer Ausführungsform ist an der Kolbenstange eine Verlängerung ausgeführt, die endseitig aus dem Zylinder ragt. Der Vorteil dieser Maßnahme besteht darin, dass eine Verlängerung leichter abzudichten ist als das Kraftübertragungsmittel, dass beispielsweise von einem Bowdenzug oder einer Gewindestande oder einer Zahnstange gebildet wird.

In weiterer konstruktiver Ausgestaltung weist der Zylinder eine Kolbenstangenführung für die Kolbenstange und eine Führung für die Verlängerung aufweist. Damit wird die Kolbenstange radial besonders gut geführt.

Optional weist die Verlängerung einen Hubbegrenzungsanschlag für die Kolbenstange auf. Damit kann der Hub der Kolbenstange bei verschiedenen Anwendungen mit einer einzigen Ausführungsform des Kolben-Zylinderaggregates angepasst und damit eine Standardisierung erreicht werden.

Gemäß einem vorteilhaften Unteranspruch wird der Hubbegrenzungsanschlag von einer Hülse gebildet. Eine Weiterentwicklung besteht darin, dass die Hülse eine Gewindeverbindung mit der Verlängerung eingeht und damit stufenlos verstellbar ist.

Bei einer weiteren Ausführungsform ist die Kolbenstange hohl ausgeführt und nimmt einen Verbindungsanschluss auf, der einerseits mit dem Zylinder und andererseits mit dem Kraftübertragungsmittel verbunden ist. Auch bei maximal ausgefahrener Kolbenstange befindet sich noch ein Abschnitt des Verbindungsanschlusses innerhalb der hohlen Kolbenstange, so dass der Verbindungsanschluss und die Kolbenstange sehr leicht gegeneinander abdichtbar sind.

Um eine möglichst große, aber konstruktiv einfach herstellbare Anschlussfläche zu erhalten, weist der Verbindungsanschluss einen Flansch auf, der mit dem Zylinder verbunden ist.

Dabei ist vorteilhafterweise vorgesehen, dass der Flansch an einem Boden des Zylinders befestigt ist. Der Flansch kann unmittelbar auf dem Boden angeordnet sein und diesen im Hinblick auf die mechanische Festigkeit verbessern.

Um den Zugang des Kraftübertragungsmittels an eine der Baugruppen des Kolben-Zylinderaggregat zu vereinfachen, weist mindestens eine der Baugruppen ein radiales Anschlussorgan zur Befestigung auf.

Bei einer weiteren Ausführungsform ist erfindungsgemäß vorgesehen, dass der Zylinder ein konzentrisch zur Kolbenstange angeordnetes Kapselelement aufweist, der das Kraftübertragungselement aufnimmt, wobei das Kraftübertragungselement durch die hohl ausgeführte Kolbenstange bis zu einer Befestigungssstelle geführt wird.

Mit dieser Variante wird der Vorteil erreicht, dass das Kolben-Zylinderaggregat als eine einfache Hülle für das Kraftübertragungselement anzusehen ist. Folglich können überhaupt keine Querkräfte oder sonstigen Belastungen von dem Kraftübertragungselement auf das Kolben-Zylinderaggregat übertragen werden.

Um eine möglichst exakte Führung des Kraftübertragungselementes zu erreichen, erstreckt sich das Kapselelement bis in die Kolbenstange. Das Kapselelement kann mit einfachen Mitteln gegen das Eindringen von Betriebsmedium aus dem Zylinder abgedichtet werden.

Dabei ist vorteilhafterweise vorgesehen, dass das Kapselelement von einem Rohr gebildet wird. Bei einer Betriebsbewegung der Kolbenstange teleskopiert die Kolbenstange gleichzeitig mit dem Kapselelement.

Um keine Hublängenverlust hinnehmen zu müssen, ist das Kapselelement am Boden des Zylinders befestigt.

Des weiteren ist im Hinblick auf eine geringe Reibung zwischen der Kolbenstange und dem Kapselelement vorgesehen, dass das Kapselelement winkelbeweglich gelagert ist.

Anhand der folgenden Figurenbeschreibung soll die Erfindung näher erläutert werden.

Es zeigt:
- Fig. 1: Prinzipdarstellung eines Betätigungssystems mit dem erfindungsgemäßen Kolben-Zylinderaggregat
- Fig. 2: Kolben-Zylinderaggregat nach der Fig. 1 als Einzelteil
- Fig. 3: Detailabwandlung des Kolben-Zylinderaggregat nach Fig. 2
- Fig. 4 u. 5: Alternativausführung des erfindungsgemäßen Kolben-Zylinderaggregates

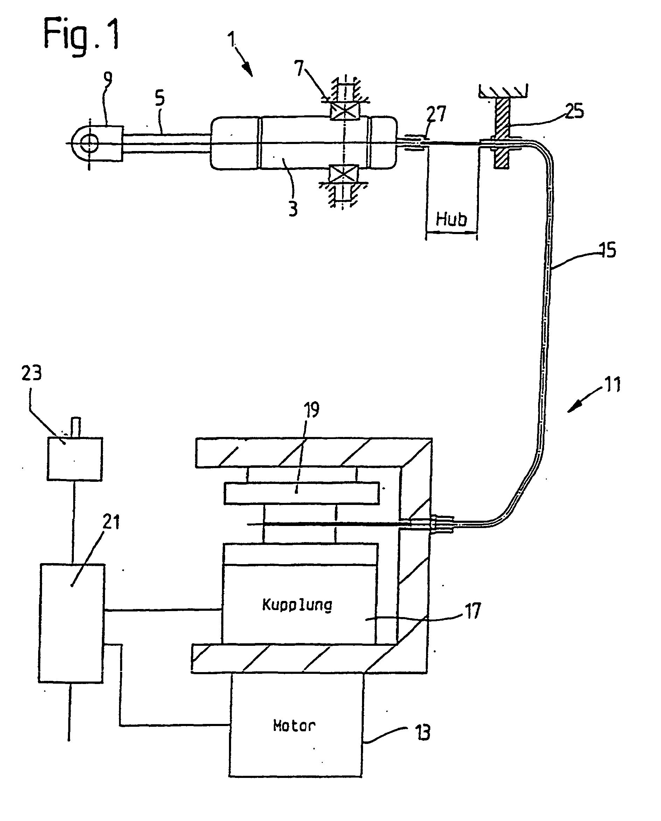

Die Fig. 1 zeigt ein Betätigungssystem, das ein Kolben-Zylinderaggregat 1 in der Bauform einer Gasfeder enthält. Das Betätigungssystem kann beispielhaft für die Öffnungs- und Schließbewegung einer Fahrzeugtür oder Fahrzeugklappe verwendet werden. Das Kolben-Zylinderaggregat verfügt als eine Baugruppe einen Zylinder 3 und als eine zweite Baugruppe über eine Kolbenstange 5, wobei die Kolbenstange axial relativ zum Zylinder beweglich ist. Der Zylinder ist mit einem gasförmigen Druckmedium gefüllt, so dass auf die Kolbenstange eine Ausschubkraft wirksam ist. Jede der beiden Baugruppe weist ein Anschlussorgan 7; 9, wobei das zylinderseitige Anschlussorgan 7 radial in der Bauform eines Schwenklagers ausgeführt ist. Bezogen auf das o. g. Anwendungsbeispiel kann das Schwenklager 7 an einer Fahrzeugkarosserie und das Anschlusslager 9 an einer Fahrzeugklappe befestigt sein.

Des weiteren umfasst das Betätigungssystem eine Verstelleinrichtung 11, die einen Motor 13 als Aktuator und einen Bowdenzug als Kraftübertragungsmittel 15. Zusätzlich ist dem Aktuator eine Kupplung 17 und eine Aufrollmechanik 19, die eine nicht dargestellte Feder enthält, um bei abgekuppeltem Motor eine Drehbewegung der Aufrollmechanik zu erreichen. Eine Steuerelektronik 21 in Verbindung mit mindestens einem die Bewegung der Klappe erfassenden Sensor 23 beeinflusst den Betrieb des Aktuators.

Das Kolben-Zylinderaggregat übt eine Stellkraft in Ausfahrrichtung der Kolbenstange 5 aus. Hingegen wirkt der Aktuator mit dem Kraftübertragungsmittel gegen die Stellkraft des Kolben-Zylinderaggregat und lässt die Kolbenstange wieder einfahren. Das Kraftübertragungsmittel bzw. der Bowdenzug stützt sich axial an einem Anschlag 25 ab. Zwischen dem Anschlag und einem Verbindungsanschluss 27 des Bowdenzuges an dem Kolben-Zylinderaggregat 1 liegt ein Abstand vor, der mindestens der Hublänge der Kolbenstange entspricht.

Die Erfindung beschränkt sich keinesfalls auf einen Aktuator in der Bauform eines Motors. Man könnte auch eine einfache handbetriebene Kurbel verwenden. Auch die Kraftübertragungsmittel könnten abweichend ausgeführt sein, indem z. B. eine Zahnstange eingesetzt wird.

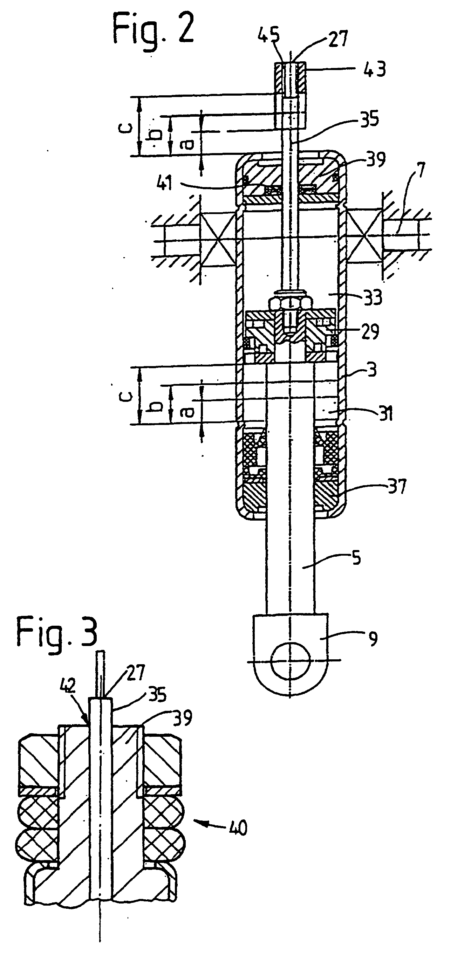

Die Figur 2 beschränkt sich in ihrer Darstellung auf das Kolben-Zylinderaggregat entsprechend der Fig. 1. Die Kolbenstange 5 verfügt über einen Kolben 29, der den Zylinder in zwei Arbeitsräume 31; 33 unterteilt. Ausgehend vom Kolben erstreckt sich eine Verlängerung 35 durch den Arbeitsraum 33 bis zum außerhalb des Zylinders befindlichen Verbindungsanschluss 27. Die Verlängerung ist derart bemessen, dass der Verbindungsanschluss auch bei maximal ausgefahrener Kolbenstange nicht an der Kolbenstangeführung vorgespannt ist. Des weiteren greift die Verlängerung konzentrisch am Kolben bzw. der Kolbenstange an, so dass bei einer Verstellkraft auf die Verlängerung keine Querkräfte auftreten können. Damit die Verlängerung mit einem geringen konstruktiven Aufwand konzentrisch am Kolben befestigt werden kann, ist das Anschlussorgan 7 als ein radiales Schwenklager ausgeführt. Alternativ könnte die Führung 39 auch ein Stiftgelenk 40 aufweisen, das einen Zentralkanal 42 enthält, in dem die Verlängerung 35 verschiebbar ist, wie als Prinzipskizze in der Fig. 3 dargestellt ist.

Für die Kolbenstange steht eine Kolbenstangenführung 37 zur Verfügung. Auch die Verlängerung ist in einer Führung 39 zentriert, die eine Dichtung 41 aufweist, um die Arbeitsräume gegen die Atmosphäre abzudichten.

Am äußeren Ende der Verlängerung 35 ist ein Hubbegrenzungsanschlag 43 befestigt, mit dem die nutzbare Hublänge des Kolben-Zylinderaggregat bestimmt wird. Der Hubbegrenzungsanschlag wird von einer Hülse gebildet, die unterschiedlichen Längen aufweisen kann. Der endseitige Abstand a; b oder c zur Kolbenstangeführung bestimmt die Hublänge des Kolben-Zylinderaggregates. Alternativ kann die Hülse mit der Verlängerung auch eine Gewindeverbindung 45 bilden, so dass die nutzbare Hublänge in Grenzen stufenlos einstellbar ist.

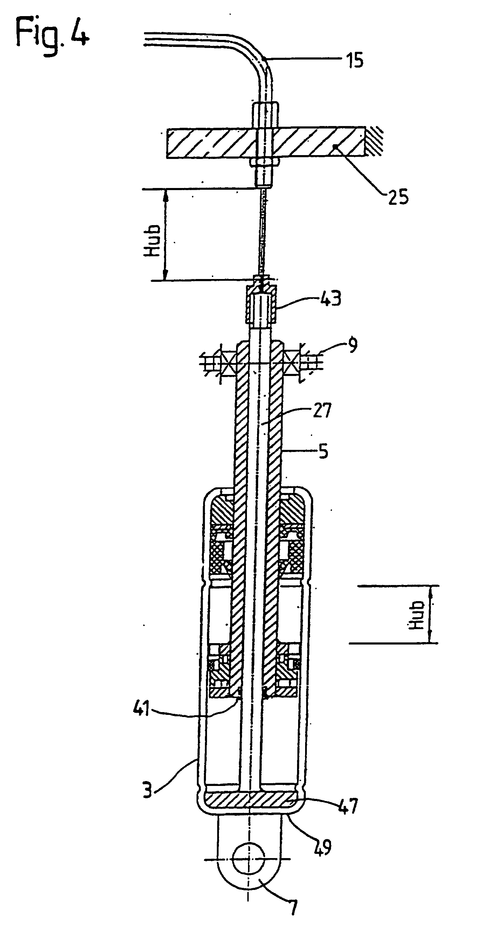

Die Fig. 4 stellt eine Abwandlung der Fig. 2 dar. Der wesentliche Unterschied zur Fig. 2 besteht darin, dass die Kolbenstange 5 durchgängig hohl ausgeführt ist und den Verbindungsanschluss 27 aufnimmt. Der Verbindungsanschluss verfügt über einen Flansch 47, der am Boden 49 des Zylinders befestigt ist. Die Länge des Verbindungsanschlusses 27 ist derart bemessen, dass er bei jeder möglichen Hublänge der Kolbenstange über das offene Ende der Kolbenstange ragt. Um keinen Verlust von Betriebsmedium aufkommen zu lassen, ist zwischen der hohlen Kolbenstange und dem Verbindungsanschluss 27 die Dichtung 41 angeordnet, die den für die Relativbewegung zwischen der Verlängerung und der Kolbenstange notwendigen Ringspalt abdichtet. In diesem Fall verfügt die Kolbenstange über ein radiales Anschlussorgan 9 in der Bauform eines Schwenklagers. Bezogen auf die Kolbenstange wird der Zylinder 3 bei einer wirksamen Verstellkraft von dem Kraftübertragungsmittel 15 in Richtung des Kolbens gezogen.

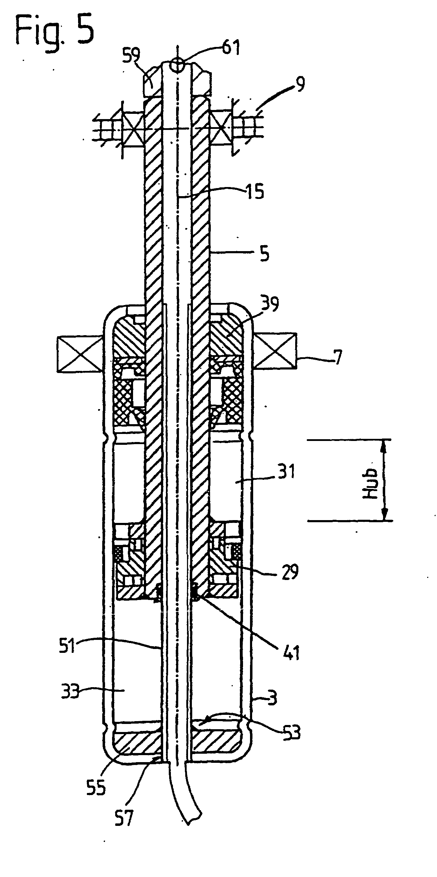

Die Fig. 5 zeigt eine Abwandlung der Fig. 4. Anstelle des Verbindungsanschlusses 27 wird ein Kapselelement 51 in der Form eines Rohres verwendet, das den Boden 49 des Zylinders 3 durchdringt und damit die Möglichkeit der Durchführung des Kraftübertragungselementes 15 ermöglicht. Um geringe winkelfehler des Kapselelementes 51 bezogen auf die Kolbenstange 5 ausgleichen zu können, verfügt das Kapselelement über eine elastische Lagerstelle 53, die beispielsweise von einem Elastomerring 55 gebildet werden kann. Ein derartiger Elastomerring bietet den Vorteil der Abdichtung des Arbeitsraums 33 im Bereich einer zentralen Öffnung 57 im Boden für das Kapselelement. Spritztechnisch kann eine einfache und trotzdem haltbare und fluiddichte Verbindung zwischen dem Elastomerring und dem Kapselelement erreicht werden.

Das Kapselelement ragt in jeder Hublage der Kolbenstange bis in diese hinein, wobei ab einer bestimmten Ausfahrstellung der Kolbenstange auch diese ein Kapselelement bezogen auf das Kraftübertragungselement darstellt.

In diesem Ausführungsbeispiel sind beide Anschlussorgane 7; 9 als radiale Schwenklager ausgeführt, wobei durchaus andere Anschlussformen möglich sind.

Das Kraftübertragungselement 15 ist direkt an dem zu bewegenden Element, beispielsweise der Fahrzeugklappe 59 an einer Befestigungsstelle 61 angebunden. Damit dient das Kolben-Zylinderaggregat lediglich als eine Hülle, die keine Kräfte des Kraftübertragungselementes aufnehmen muss. Ein weiterer Vorteil dieser Lösung besteht darin, dass die Ausrichtung des Kolben-Zylinderaggregates völlig unabhängig von der Kraftrichtung des Kraftübertragungselementes 15 möglich ist, d. h. man kann, wenn man bei dem mehrfach erwähnten Anwendungbeispiel bleibt, wahlweise den Zylinder 3 oder die Kolbenstange 5 an der Klappe gelenkig. befestigen. Für die Funktionsweise des Kraftübertragungselementes entstehen dadurch keine Unterschiede.

## Patentansprüche

1. Betätigungssystem, umfassend ein Kolben-Zylinderaggregat (1), welches einen Zylinder (3) als eine erste Baueinheit und eine relativ zum Zylinder (3) axial beweglich angeordnete Kolbenstange (5) als eine zweite Baueinheit umfasst, sowie eine zur Ausübung einer Verstellkraft in Wirkverbindung mit dem Kolben-Zylinderaggregat stehende Verstelleinrichtung, die einen Aktuator (13) und ein Kraftübertragungsmittel (15) von dem Aktuator (13) zu dem Kolben-Zylinderaggregat aufweist, wobei das Kraftübertragungsmittel (15) konzentrisch an einer der beiden Baueinheiten (3;5) des Kolben-Zylinderaggregates (1) angreift,
**dadurch gekennzeichnet, dass** das Kolben-Zylinderaggregat (1) durch eine Gasfeder gebildet wird, wobei der Aktuator (13) mit dem Kraftübertragungsmittel (15) gegen die Stellkraft des Kolben-Zylinderaggregats wirkt.

2. Betätigungssystem nach Anspruch 1,
**dadurch gekennzeichnet, dass** das Kraftübertragungsmittel (15) zentral in dem Kolben-Zylinderaggregat (1) angeschlossen ist.

3. Betätigungssystem nach Anspruch 2,
**dadurch gekennzeichnet, dass** an der Kolbenstange (5) eine Verlängerung (35) ausgeführt ist, die endseitig aus dem Zylinder (3) ragt.

4. Betätigungssystem nach Anspruch 3,
**dadurch gekennzeichnet, dass** der Zylinder (3) eine Kolbenstangenführung (37) für die Kolbenstange (5) und eine Führung (39) für die Verlängerung (35) aufweist.

5. Betätigungssystem nach Anspruch 3,
**dadurch gekennzeichnet, dass** die Verlängerung (35) einen Hubbegrenzungsanschlag (43) für die Kolbenstange (5) aufweist.

6. Betätigungssystem nach Anspruch 5,
**dadurch gekennzeichnet, dass** der Hubbegrenzungsanschlag (43) von einer Hülse gebildet wird.

7. Betätigungssystem nach Anspruch 6,
**dadurch gekennzeichnet, dass** die Hülse eine Gewindeverbindung (45) mit der Verlängerung (35) eingeht und damit stufenlos verstellbar ist.

8. Betätigungssystem nach einem der Ansprüche 1-7,
**dadurch gekennzeichnet, dass** die Kolbenstange (5) hohl ausgeführt ist und einen Verbindungsanschluss (27) aufnimmt, der einerseits mit dem Zylinder (3) und andererseits mit dem Kraftübertragungsmittel (15) verbunden ist.

9. Betätigungssystem nach Anspruch 8,
**dadurch gekennzeichnet, dass** der Verbindungsanschluss (27) einen Flansch (47) aufweist, der mit dem Zylinder (3) verbunden ist.

10. Betätigungssystem nach Anspruch 8,
**dadurch gekennzeichnet, dass** der Flansch (47) an einem Boden (49) des Zylinders (3) befestigt ist.

11. Betätigungssystem nach einem oder mehreren der Ansprüche 1 -10,
**dadurch gekennzeichnet, dass** mindestens eine der Baugruppen (3;5) ein radiales Anschlussorgan (7;9) zur Befestigung aufweist.

12. Betätigungssystem, umfassend ein Kolben-Zylinderaggregat (1), welches einen Zylinder (3) als eine erste Baueinheit und eine relativ zum Zylinder (3) axial beweglich angeordnete Kolbenstange (5) als eine zweite Baueinheit umfasst, sowie eine zur Ausübung einer Verstellkraft in Wirkverbindung mit dem Kolben-Zylinderaggregat stehende Verstelleinrichtung, die einen Aktuator (13) und ein Kraftübertragungsmittel (15) von dem Aktuator (13) zu dem Kolben-Zylinderaggregat aufweist, wobei die Kolbenstange (5) hohl ausgeführt ist, wobei der Zylinder (3) ein konzentrisch zur Kolbenstange (5) angeordnetes Kapselelement (51) aufweist, das das Kraftübertragungselement (15) aufnimmt, und wobei das Kraftübertragungselement (15) durch die Kolbenstange (5) bis zu einer - Befestigungsstelle (61) geführt wird,
**dadurch gekennzeichnet, dass** das Kolben-Zylinderaggregat (1) durch eine Gasfeder gebildet wird, wobei der Aktuator (13) mit dem Kraftübertragungsmittel (15) gegen die Stellkraft des Kolben-Zylinderaggregats wirkt.

13. Betätigungssystem nach Anspruch 12,
**dadurch gekennzeichnet, dass** sich das Kapselelement (51) bis in die Kolbenstange (5) erstreckt.

14. Betätigungssystem nach Anspruch 12 oder 13,
**dadurch gekennzeichnet, dass** das Kapselelement (51) von einem Rohr gebildet wird.

15. Betätigungssystem nach einem der Ansprüche 12 - 14,
**dadurch gekennzeichnet, dass** das Kapselelement (51) am Boden (47) des Zylinders (3) befestigt ist.

16. Betätigungssystem nach einem der Ansprüche 12 - 15,
**dadurch gekennzeichnet, dass** das Kapselelement (51) winkelbeweglich gelagert ist.

17. Betätigungssystem nach einem der Ansprüche 1 -16,
**dadurch gekennzeichnet, dass** die Kolbenstange (5) einen Kolben (29) umfasst, der den Zylinder (3) in zwei Arbeitsräume (31, 33) für ein gasförmiges Druckmedium unterteilt.

## Claims

1. Actuating system, comprising a piston-cylinder assembly (1) which comprises a cylinder (3) as a first structural unit and a piston rod (5) arranged axially movably relative to the cylinder (3), as a second structural unit, as well as an adjustment device which is in operative connection to the piston-cylinder unit for the exertion of an adjustment force and which has an actuator (13) and a force transmission means (15) from the actuator (13) to the piston-cylinder unit, wherein the force transmission means (15) engages concentrically on one of the two structural units (3; 5) of the piston-cylinder unit (1), **characterised in that** the piston-cylinder unit (1) is formed by a gas spring, the actuator (13) with the force transmission means (15) acting against the adjusting force of the piston-cylinder unit.

2. Actuating system according to claim 1, **characterised in that** the force transmission means (15) is connected centrally in the piston-cylinder unit (1).

3. Actuating system according to claim 2, **characterised in that** an extension (35) projecting at the end from the cylinder (3), is formed on the piston rod (5).

4. Actuating system according to claim 3, **characterised in that** the cylinder (3) has a piston rod guide (37) for the piston rod (5) and a guide (39) for the extension (35).

5. Actuating system according to claim 3, **characterised in that** the extension (35) has a lift limiting stop (43) for the piston rod (5).

6. Actuating system according to claim 5, **characterised in that** the lift limiting stop (43) is formed by a sleeve.

7. Actuating system according to claim 6, **characterised in that** the sleeve is connected to the extension (35) by a threaded connection (45) and can therefore be continuously adjusted.

8. Actuating system according to any one of claims 1 to 7, **characterised in that** the piston rod (5) is hollow in design and receives a connection terminal (27) which is connected, one the one hand, to the cylinder (3) and, on the other hand, to the force transmission means (15).

9. Actuating system according to claim 8, **characterised in that** the connection terminal (27) has a flange (47) which is connected to the cylinder (3).

10. Actuating system according to claim 8, **characterised in that** the flange (47) is fastened to a base (49) of the cylinder (3).

11. Actuating system according to one or more of claims 1 to 10, **characterised in that** at least one of the assemblies (3; 5) has a radial connection member (7; 9) for fastening.

12. Actuating system, comprising a piston-cylinder unit (1) which comprises a cylinder (3) as a first structural unit and a piston rod (5) arranged so as to be able to move axially relative to the cylinder (3), as a second structural unit, as well as an adjustment device which is in operative connection to the piston-cylinder unit to exert an adjusting force and which has an actuator (13) and a force transmission means (15) from the actuator (13) to the piston-cylinder unit, wherein the piston rod (5) is hollow in design, the cylinder (3) having a capsule element (51) arranged concentrically to the piston rod (5), which capsule element (51) receives the force transmission elements (15), and wherein the force transmission element (15) is guided by the piston rod (5) to a fastening point (61), **characterised in that** the piston-cylinder unit (1) is formed by a gas spring, the actuator (13) with the force transmission means (15) acting against the adjustment force of the piston-cylinder unit.

13. Actuating system according to claim 12, **characterised in that** the capsule element (51) extends into the piston rod (5).

14. Actuating system according to claim 12 or 13, **characterised in that** the capsule element (51) is formed by a tube.

15. Actuating system according to any one of claims 12 to 14, **characterised in that** the capsule element (51) is fastened to the base (47) of the cylinder (3).

16. Actuating system according to any one of claims 12 to 15, **characterised in that** the capsule element (51) is mounted for angular movement.

17. Actuating system according to any one of claims 1 to 16, **characterised in that** the piston rod (5) comprises a piston (29), which divides the cylinder (3) into two working spaces (31, 33) for a gaseous pressure medium.

## Revendications

1. Système d'actionnement, comprenant un groupe piston-cylindre (1), lequel comprend un cylindre (3) en tant que première unité modulaire et une tige de piston (5), disposée de manière à pouvoir se déplacer axialement par rapport au cylindre (3), en tant que seconde unité modulaire, ainsi qu'un dispositif de réglage, étant en liaison active avec le groupe piston-cylindre pour l'exercice d'une force de réglage, qui comprend un actionneur (13) et un dispositif de transmission de la force (15) de l'actionneur (13) au groupe piston-cylindre, sachant que le dispositif de transmission de la force (15) prend prise de manière concentrique sur l'une des deux unités modulaires (3 ; 5) du groupe piston-cylindre (1), **caractérisé en ce que** le groupe piston-cylindre (1) est formé par un ressort à gaz, sachant que l'actionneur (13) agit conjointement au dispositif de transmission de la force (15) contre la force de réglage du groupe piston-cylindre.

2. Système d'actionnement selon la revendication 1, **caractérisé en ce que** le dispositif de transmission de la force (15) est raccordé de manière centrale dans le groupe piston-cylindre (1).

3. Système d'actionnement selon la revendication 2, **caractérisé en ce qu'**on a réalisé, sur la tige de piston (5), un prolongement (35) qui dépasse du cylindre (3) du côté terminal.

4. Système d'actionnement selon la revendication 3, **caractérisé en ce que** le cylindre (3) comprend une glissière (37) pour la tige de piston (5) et une glissière (39) pour le prolongement (35).

5. Système d'actionnement selon la revendication 3, **caractérisé en ce que** le prolongement (35) comprend une butée de limitation de la course (43) pour la tige de piston (5).

6. Système d'actionnement selon la revendication 5, **caractérisé en ce que** la butée de limitation de la course (43) est formée d'une douille.

7. Système d'actionnement selon la revendication 6, **caractérisé en ce que** la douille est reliée au prolongement (35) en formant un raccord fileté (45) et peut ainsi être réglée de manière continue.

8. Système d'actionnement selon l'une quelconque des revendications 1 à 7, **caractérisé en ce que** la tige de piston (5) est réalisée de manière creuse et loge un raccord de connexion (27) qui est relié d'une part au cylindre (3) et d'autre part au dispositif de transmission de la force (15).

9. Système d'actionnement selon la revendication 8, **caractérisé en ce que** le raccord de connexion (27) comprend une bride (47) qui est reliée au cylindre (3).

10. Système d'actionnement selon la revendication 8, **caractérisé en ce que** la bride (47) est fixée à un fond (49) du cylindre (3).

11. Système d'actionnement selon une ou plusieurs des revendications 1 à 10, **caractérisé en ce qu'**au moins un des groupes (3 ; 5) comporte un organe radial de raccordement (7 ; 9) pour la fixation.

12. Système d'actionnement, comprenant un groupe piston-cylindre (1), lequel comprend un cylindre (3) en tant que première unité modulaire et une tige de piston (5), disposée de manière à pouvoir se déplacer axialement par rapport au cylindre (3), en tant que seconde unité modulaire, ainsi qu'un dispositif de réglage, étant en liaison active avec le groupe piston-cylindre pour l'exercice d'une force de réglage, qui comprend un actionneur (13) et un dispositif de transmission de la force (15) de l'actionneur (13) au groupe piston-cylindre, sachant que la tige à piston (5) est réalisée de manière creuse, sachant que le cylindre (3) comprend un élément d'encapsulage (51) disposé de manière concentrique à la tige de piston (5) qui loge l'élément de transmission de la force (15) et sachant que l'élément de transmission de la force (15) est guidé par la tige de piston (5) jusqu'à un point de fixation (61), **caractérisé en ce que** le groupe piston-cylindre (1) est formé par un ressort à gaz, sachant que l'actionneur (13) agit conjointement au dispositif de transmission de la force (15) contre la force de réglage du groupe piston-cylindre.

13. Système d'actionnement selon la revendication 12, **caractérisé en ce que** l'élément d'encapsulage (51) s'étend jusque dans la tige de piston (5).

14. Système d'actionnement selon la revendication 12 ou 13, **caractérisé en ce que** l'élément d'encapsulage (51) est formé par un tube.

15. Système d'actionnement selon l'une des revendications 12 à 14, **caractérisé en ce que** l'élément d'encapsulage (51) est fixé au fond (47) du cylindre (3).

16. Système d'actionnement selon l'une des revendications 12 à 15, **caractérisé en ce que** l'élément d'encapsulage (51) est logé de manière à pouvoir être déplacé de façon angulaire.

17. Système d'actionnement selon l'une des revendications 1 à 16, **caractérisé en ce que** la tige de piston (5) comprend un piston (29) qui divise le cylindre (3) en deux espaces de travail (31, 33) pour un agent de pressurisation gazeux.
